# EUROPÄISCHE PATENTANMELDUNG

(11) **EP 2 927 780 A1**
(43) Veröffentlichungstag der Anmeldung: **07.10.2015**
(21) Anmeldenummer: 14163459.2
(22) Anmeldetag: 03.04.2014
(51) Int. Cl.: G06F 3/01, B60R 1/08

(54) **Schwenkbarer Innenspiegel für ein Fahrzeug**

(71) Anmelder: SMR Patents S.à.r.l., 1653 Luxembourg (LU)
(72) Erfinder: Wieczorek, Romeo, 73732 Esslingen (DE)
(74) Vertreter: Weber-Bruls, Dorothée

(57) **Zusammenfassung**

Die Erfindung betrifft einen schwenkbaren Innenspiegel (100) für ein Fahrzeug, mit einer Schwenkeinrichtung (102), die ausgelegt ist, den Innenspiegel (100) von einer Normalposition (110) in eine Abblendposition (112) zu bewegen, wobei in der Abblendposition (112) eine Blendung eines Fahrers des Fahrzeugs durch den Innenspiegel (100) reduziert ist; und einer Bedieneinrichtung (103), die ausgelegt ist, die Schwenkeinrichtung (102) ansprechend auf eine Bewegung des Fahrers zu aktivieren. Ferner betrifft die Erfindung ein Verfahren hierzu.

## Beschreibung

Die vorliegende Erfindung betrifft einen schwenkbaren Innenspiegel für ein Fahrzeug, ein Verfahren zur gestengesteuerten Schwenkung eines Innenspiegels für ein Fahrzeug, und ein Fahrzeug mit solch einem schwenkbaren Innenspiegel.

Fahrerassistenzsysteme nehmen auf Basis von Umgebungssensoren wie Radar, Video, Infrarot und Ultraschall das Umfeld des Fahrzeugs wahr und interpretieren es. Sie unterstützen den Fahrer in vielen Fahrsituationen und erhöhen dadurch Fahrkomfort und Fahrsicherheit. Fahrerassistenzsysteme tragen zu mehr Sicherheit bei, indem sie den Fahrer in kritischen Situationen, in denen ein schnelles und sicheres Handeln notwendig ist, unterstützen. In Gefahrensituationen, in denen der Fahrer durch plötzlich auftretende Blendung durch ein hinter ihm fahrendes Fahrzeug in seiner Reaktionsfähigkeit beeinträchtigt wird, ist eine Unterstützung des Fahrers durch technische Hilfsmittel wünschenswert.

Es ist die Aufgabe der vorliegenden Erfindung, dem Fahrer eines Fahrzeugs Mittel zu verschaffen, um eine Gefahrensituation aufgrund von Blendung durch ein hinter ihm fahrendes Fahrzeug einfach abzuwehren.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass eine Blendwirkung durch ein hinter dem Fahrzeug fahrendes Fahrzeug insbesondere in der Dunkelheit durch den Innenspiegel des Fahrzeugs verursacht wird. Klappt man diesen in einer Blendsituation um, so ist der Strahlengang unterbrochen und die Blendwirkung tritt nicht mehr ein. Um das Umklappen einfach und sicher zu gestalten, verfügt ein erfindungsgemäßer Innenspiegel über eine Schwenkeinrichtung, die ausgelegt ist, den Innenspiegel von einer Normalposition in eine Abblendposition zu bewegen, wobei in der Abblendposition eine Blendung des Fahrers durch den Innenspiegel reduziert ist. Ferner verfügt solch ein Innenspiegel über eine Bedieneinrichtung, die ausgelegt ist, die Schwenkeinrichtung ansprechend auf eine Bewegung des Fahrers zu aktivieren. Die Aktivierung erfolgt dabei mittels Gestensteuerung des Fahrers, beispielsweise durch eine Bewegung des Arms oder der Hand des Fahrers in Richtung auf den Innenspiegel.

Um die Erfindung im Detail zu beschreiben, werden die folgenden Abkürzungen und Bezeichnungen verwendet:
FGL, SMA:
   Formgedächtnislegierungen (FGL; englisch: Shape Memory Alloy - SMA), oft auch als "Memorymetalle" bzw. Gedächtnismetalle bezeichnet, sind spezielle Metalle, die in zwei unterschiedlichen Kristallstrukturen existieren können und sich an eine frühere Formgebung trotz nachfolgender starker Verformung scheinbar "erinnern" können.
      - LED:: Leuchtdiode.
      - EC-Glas:: abblendendes elektrochromatische Spiegelglas.

Im Folgenden wird ein Innenspiegel mit Abblendfunktion und eine Gestensteuerung für einen solchen Innenspiegel beschrieben. Die Funktion eines solchen Innenspiegels basiert auf automatischem Abklappen bzw. Umklappen. Der Innenspiegel ist somit für den Fahrer sehr einfach zu bedienen. Der Fahrer kann mit Hilfe einer Gestensteuerung durch eine einfache Handbewegung in Richtung Innenspiegel den Aktuator starten, der den Spiegel in eine Position bewegt, die den Fahrer nicht mehr blendet. Bei Nutzung eines SMA-Aktuators kann der Spiegel geräuschlos bewegt werden. Ein solcher Spiegel lässt dem Fahrer durch einfachste Bedienung, nämlich durch Gestensteuerung, mehr Entscheidungsfreiheit. Zudem ist er bedeutend günstiger in der Herstellung als ein Spiegel mit EC-Glas. Die Kombination aus Gestensteuerung und SMA-Aktuator ermöglicht eine lautlose und gleichmäßige Bewegung des Spiegels, so dass der Fahrer sich auf die Straße konzentrieren kann.

Gemäß einem Aspekt betrifft die Erfindung einen schwenkbaren Innenspiegel für ein Fahrzeug, mit einer Schwenkeinrichtung, die ausgelegt ist, den Innenspiegel von einer Normalposition in eine Abblendposition zu bewegen, wobei in der Abblendposition eine Blendung eines Fahrers des Fahrzeugs durch den Innenspiegel reduziert ist; und einer Bedieneinrichtung, die ausgelegt ist, die Schwenkeinrichtung ansprechend auf eine Bewegung des Fahrers zu aktivieren.

Der Vorteil eines solchen schwenkbaren Innenspiegels ist, dass der Fahrer des Fahrzeugs in Situationen, in denen er durch hinter ihm fahrende Fahrzeuge geblendet wird, den Innenspiegel durch eine einfache Bewegung abklappen kann, so dass er nicht mehr geblendet wird. Er kann daher unabhängig von der durch die Blendung beeinträchtigten visuellen Wahrnehmung durch einfach Gestensteuerung die Blendung reduzieren bzw. abstellen und sich aus der Gefahrensituation begeben. Der schwenkbare Innenspiegel ist einfach zu bedienen. Bereits eine einfache Bewegung des Arms oder der Hand hin zum Innenspiegel reicht aus, um den Innenspiegel abzuklappen.

Gemäß einer Ausführungsform des schwenkbaren Innenspiegels umfasst die Schwenkeinrichtung einen Formgedächtnis-Aktuator, der ausgelegt ist, den Innenspiegel in die Abblendposition zu bewegen.

Der Vorteil eines solchen Formgedächtnis-Aktuators liegt darin, dass der Innenspiegel sich wieder in exakt die gleiche Position zurückbewegen lässt, wenn die Gefahrensituation vorüber ist. Das heißt, der Fahrer, der einmal eine für ihn bequeme Position des Innenspiegels eingestellt hat, braucht dies nach Rückstellung des Innenspiegels nicht erneut tun. Das Formgedächtnis merkt sich vielmehr die ursprüngliche Position und stellt den Innenspiegel wieder in exakt die gleiche Position zurück. Dies bedeutet ein erhebliches Maß an Fahrkomfort und Bequemlichkeit für den Fahrer.

Gemäß einer Ausführungsform des schwenkbaren Innenspiegels umfasst der Formgedächtnis-Aktuator einen Formgedächtnis-Draht, der ansprechend auf einen Stromfluss durch den Formgedächtnis-Draht seine Länge verändert.

Der Vorteil eines solchen Formgedächtnis-Drahts liegt darin, dass er bei einer Änderung seiner Temperatur, beispielsweise durch Anlegen eines Stroms, seine Länge verändert. Dieser Effekt kann genutzt werden, um eine Bewegung des Innenspiegels unter Nutzung des Drahtes zu bewirken. Ein weiterer Vorteil des Formgedächtnis-Drahts liegt darin, dass er bei Abkühlung, d.h. wenn der Stromfluss durch den Draht unterbrochen wird, wieder seine ursprüngliche Länge annimmt, so dass der Innenspiegel wieder in seine ursprüngliche Position, d.h. die Normalposition, gebracht werden kann.

Gemäß einer Ausführungsform des schwenkbaren Innenspiegels ist die Bedieneinrichtung ausgelegt, den Formgedächtnis-Draht ansprechend auf die Bewegung des Fahrers mit Strom zu versorgen, insbesondere an eine Stromversorgung des Fahrzeugs anzuschließen.

Der Vorteil einer solchen Bedieneinrichtung liegt darin, dass sie den Formgedächtnis-Draht ansprechend auf die Bewegung des Fahrers mit Strom versorgt, also sehr schnell reagiert auf eine Bewegung des Fahrers. Damit kann der Strom unverzüglich eine Temperaturänderung im Draht bewirken, so dass dieser sich zusammenzieht und den Innenspiegel in die Abblendposition bewegt. Die Totzeiten sind somit sehr kurz, so dass die Verstellung des Spiegels unverzüglich auf die Bewegung des Fahrers erfolgt.

Gemäß einer Ausführungsform des schwenkbaren Innenspiegels ist der Formgedächtnis-Draht auf einer ersten Gewinderolle aufgerollt und bewirkt ansprechend auf den Stromfluss eine Drehbewegung der ersten Gewinderolle.

Der Vorteil eines solchen Formgedächtnis-Drahts liegt darin, dass er eine Längenänderung aufgrund des Verformungseffekts einfach in eine Drehbewegung umsetzen kann, um damit den Spiegel in die Abblendposition zu bringen.

Gemäß einer Ausführungsform des schwenkbaren Innenspiegels bildet die erste Gewinderolle eine Antriebsachse des Innenspiegels und ist ausgelegt, den Innenspiegel um einen ersten Drehwinkel zu drehen.

Der Vorteil einer solchen Gewinderolle liegt darin, dass sie einfach und günstig realisiert werden kann. Zudem kann die Gewinderolle verschiedene Dicken aufweisen, um so verschiedene Drehwinkel zu realisieren, d.h. sowohl eine Grobsteuerung des Innenspiegels als auch eine Feinsteuerung des Innenspiegels realisieren.

Gemäß einer Ausführungsform des schwenkbaren Innenspiegels ist der Formgedächtnis-Draht auf einer zweiten Gewinderolle aufgerollt, die ausgelegt ist, den Innenspiegel um einen zweiten Drehwinkel zu drehen, wobei ein Durchmesser der zweiten Gewinderolle sich von einem Durchmesser der ersten Gewinderolle unterscheidet.

Der Vorteil einer solchen zweiten Gewinderolle liegt darin, dass unterschiedliche Drehwinkel realisiert werden können. Mit unterschiedlichen Durchmessern können sowohl eine grobe Steuerung des Drehwinkels (mit der dünneren Rolle) als auch eine Feinsteuerung des Drehwinkels (mit der dickeren Rolle) vorgenommen werden.

Gemäß einer Ausführungsform des schwenkbaren Innenspiegels umfasst die Schwenkeinrichtung einen weiteren Aktuator, der ausgelegt ist, den Innenspiegel in die Normalposition zurückzubewegen, wobei der weitere Aktuator einen zweiten Formgedächtnis-Aktuator oder ein Federelement umfasst.

Der Vorteil eines solchen weiteren Aktuators liegt darin, dass der Innenspiegel wieder in seine Normalposition zurückgedreht werden kann, so dass der Innenspiegel wieder für den Normalbetrieb im Verkehr eingesetzt werden kann. Der Fahrer braucht den Innenspiegel nicht mehr zurückstellen, wenn ein zweiter Aktuator dies übernimmt.

Gemäß einer Ausführungsform des schwenkbaren Innenspiegels umfasst die Bedieneinrichtung einen Sensor, der ausgelegt ist, eine Bewegung des Fahrers, insbesondere eine Armbewegung des Fahrers in Richtung des Innenspiegels, zu detektieren und ansprechend auf einen Schwellwert der Detektion die Schwenkeinrichtung zu aktivieren.

Der Vorteil einer solchen Bedieneinrichtung mit Sensor liegt darin, dass der Innenspiegel automatisch in die Abblendposition gebracht werden kann. Der Fahrer kann den Innenspiegel durch Gesten steuern und braucht dazu nicht die volle Konzentration, die bei einer Blendsituation durch teilweisen Ausfall der visuellen Wahrnehmung oftmals nicht vorliegt.

Gemäß einer Ausführungsform des schwenkbaren Innenspiegels ist der Sensor ausgelegt, eine Änderung eines elektrischen Feldes basierend auf der Bewegung des Fahrers zu detektieren.

Der Vorteil einer solchen Detektion liegt darin, dass die Änderung des elektrischen Felds mittels Interaktion des menschlichen Körpers leicht bewerkstelligt werden kann, so dass die nötige Konzentration hierfür nur sehr gering sein muss. Der Fahrer kann sich somit auf die Straße konzentrieren und ist nicht durch die Verstellung des Innenspiegels abgelenkt.

Gemäß einer Ausführungsform des schwenkbaren Innenspiegels umfasst der Sensor einen kapazitiven Sensor mit einer aktiven Fläche, der ausgelegt ist, bei Annäherung eines Objekts, insbesondere einer Hand des Fahrers, an die aktive Fläche des Sensors eine elektrische Feldänderung zu detektieren.

Der Vorteil eines solchen kapazitiven Sensors liegt darin, dass er einfach zu realisieren ist und sowohl auf der Steuerungsplatine als auch im Gehäuse des Innenspiegels angebracht werden kann. Ferner kann ein solcher kapazitiver Sensor mit einer hohen Messgenauigkeit bis in den Femto-Bereich messen.

Gemäß einer Ausführungsform des schwenkbaren Innenspiegels ist der kapazitive Sensor ausgelegt, eine Richtung der Annäherung des Objekts an die aktive Fläche des Sensors zu erkennen.

Der Vorteil einer solchen Richtungserkennung liegt darin, dass verschiedene Bewegungen des Fahrers erkannt werden können, die verschiedene Maßnahmen einleiten können, beispielsweise Bewegung des Spiegels von der Normalposition in die Abblendposition oder von der Abblendposition zurück in die Normalposition.

Gemäß einer Ausführungsform des schwenkbaren Innenspiegels umfasst der Sensor folgendes: zumindest eine Leuchtdiode, die ausgelegt ist, ein Umfeld des Innenspiegels zu beleuchten; und eine Fotodiode, die ausgelegt ist, eine Änderung der Beleuchtung im Umfeld des Innenspiegels durch die Bewegung des Fahrers zu detektieren.

Der Vorteil eines solchen Sensors ist, dass er kostengünstig realisiert werden kann und eine hohe Genauigkeit bietet.

Es hat sich als besonders vorteilhaft herausgestellt, wenn der Sensor, der zur Erfassung einer Bewegung eines Fahrers eingesetzt wird, um in Abhängigkeit von einer erfassten Bewegung eine Schwenkeinrichtung aktivieren zu können, ein TOF-Sensor ist, also zur Lichtlaufzeitmessung geeignet ist. Solch ein Sensor erfasst nämlich sowohl eine Intensität als auch eine Entfernung, wodurch zwischen einer Bewegung eines Beifahrers und eines Fahrers unterschieden werden kann, so dass also Bewegungen eines Beifahrers ausgeblendet werden können. Ferner spricht der Sensor im gleichen Maße auf einen Gegenstand in schwarz oder weiß und somit eine Hand mit oder ohne schwarzen Handschuh an und ist somit optimal zur Erfassung einer Fahrergeste.

Gemäß einem Aspekt betrifft die Erfindung ein Verfahren zur gestengesteuerten Schwenkung eines Innenspiegels für ein Fahrzeug, umfassend ein Bewegen des Innenspiegels von einer Normalposition in eine Abblendposition, wobei in der Abblendposition eine Blendung eines Fahrers des Fahrzeugs durch den Innenspiegel reduziert ist, ansprechend auf eine Bewegung des Fahrers.

Der Vorteil eines solchen Verfahrens liegt darin, dass der Fahrer des Fahrzeugs in Situationen, in denen er durch hinter ihm fahrende Fahrzeuge geblendet wird, den Innenspiegel durch eine einfache Bewegung abklappen kann, so dass er nicht mehr geblendet wird. Er kann daher unabhängig von der durch die Blendung beeinträchtigten visuellen Wahrnehmung durch einfache Gestensteuerung die Blendung reduzieren bzw. abstellen und sich aus der Gefahrensituation begeben.

Gemäß einer Ausführungsform umfasst das Verfahren ferner ein Detektieren der Bewegung des Fahrers, insbesondere einer Armbewegung des Fahrers in Richtung des Innenspiegels basierend auf einer Änderung eines elektrischen Feldes; und ein Auslösen der Bewegung des Innenspiegels in die Abblendposition durch Betätigung eines Formgedächtnis-Aktuators ansprechend auf die Bewegungsdetektion.

Der Vorteil eines solchen Verfahrens liegt darin, dass der Fahrer mit Hilfe einer Gestensteuerung durch eine einfache Handbewegung in Richtung Innenspiegel den inneren Aktuator starten kann, der den Spiegel in eine Position bewegt, die den Fahrer nicht mehr blendet. Die Geräuschlosigkeit wird durch einen SMA Aktuator erreicht.

Die Erfindung betrifft auch ein Kraftfahrzeug mit einem erfindungsgemäßen Innenspiegel.

Weitere Ausführungsbeispiele werden Bezug nehmend auf die beiliegenden Zeichnungen erläutert. Es zeigen:
- Figur 1: eine schematische Darstellung eines schwenkbaren Innenspiegels 100 für ein Fahrzeug gemäß einer ersten erfindungsgemäßen Ausführungsform;
- Figur 2: eine schematische Darstellung eines gestensteuerbaren Innenspiegels 200 für ein Fahrzeug gemäß einer zweiten erfindungsgemäßen Ausführungsform;
- Figur 3: eine dreidimensionale Darstellung eines gestensteuerbaren, schwenkbaren Innenspiegels 300 für ein Fahrzeug gemäß einer dritten erfindungsgemäßen Ausführungsform;
- Figur 4: eine schematische Darstellung in Draufsicht eines zweiachsigen Mini-Jo 400 für einen gestensteuerbaren Innenspiegel gemäß einer Ausführungsform der Erfindung;
- Figur 5: eine schematische Darstellung in Seitenansicht des zweiachsigen Mini-Jo 400 aus Figur 4;
- Figur 6: eine schematische Darstellung in Draufsicht eines dreiachsigen Mini-Jo 600 für einen gestensteuerbaren Innenspiegel gemäß einer Ausführungsform der Erfindung;
- Figur 7: eine dreidimensionale Darstellung eines Antriebs 700 für einen gestensteuerbaren Innenspiegel, der als Jo mit Federelement realisiert ist gemäß einer Ausführungsform der Erfindung;
- Figur 8a: eine schematische Darstellung eines Sensors 700 mit Leuchtdioden und Fotodiode für einen gestensteuerbaren Innenspiegel gemäß einer Ausführungsform;
- Figur 8b: eine schematische Darstellung eines Sensors 802 mit E-Feld Sensor-Technologie für einen gestensteuerbaren Innenspiegel gemäß einer Ausführungsform; und
- Figur 9: eine schematische Darstellung eines Verfahrens 900 zur gestengesteuerten Schwenkung eines Innenspiegels für ein Fahrzeug gemäß einer Ausführungsform.

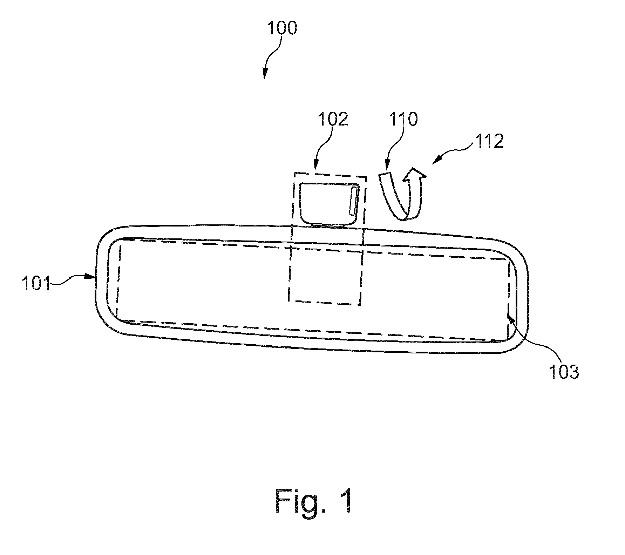

Figur 1 zeigt eine schematische Darstellung eines schwenkbaren Innenspiegels 100 für ein Fahrzeug gemäß einer Ausführungsform der Erfindung. Der schwenkbare Innenspiegel 100 kann eine Schwenkeinrichtung 102 und eine Bedieneinrichtung 103 aufweisen. Die Schwenkeinrichtung 102 kann den Innenspiegel 100 von einer Normalposition 110 in eine Abblendposition 112 bewegen. Die Normalposition 110 kann die in der Figur 1 dargestellte Position sein, bei der der Fahrer im Innenspiegel 100 hinter ihm fahrende Fahrzeuge erkennen kann. Die Abblendposition 112 kann eine Position sein, bei der eine Blendung des Fahrers durch den Innenspiegel 100 zumindest reduziert ist, d.h. es kann eine Position sein, in der der Innenspiegel 100, wie in der Figur 1 dargestellt, nach oben geklappt ist, so dass der Strahlengang von den Lichtern eines hinter dem Fahrzeug fahrenden weiteren Fahrzeugs zu den Augen des Fahrers unterbrochen ist. Die Abblendposition 112 kann auch eine Position sein, in welcher der Innenspiegel seitlich umgeklappt ist oder nach untern geklappt ist. Es sind verschiedene Drehwinkel bzw. Klappwinkel möglich. Die Bedieneinrichtung 103 kann von dem Fahrer dazu genutzt werden, die Schwenkeinrichtung 102 ansprechend auf eine Bewegung des Fahrers zu aktivieren. Bei der Bewegung kann es sich um eine Bewegung mit dem Arm oder der Hand in Richtung der Bedieneinrichtung 103 handeln. Beispielsweise kann die Bedieneinrichtung 103 auf eine gewisse Geschwindigkeit reagieren, mit der der Fahrer die Hand in Richtung der Bedieneinrichtung 103 bewegt.

In einer Ausführungsform kann die Schwenkeinrichtung 102 einen ersten Formgedächtnis-Aktuator aufweisen, mit dem der Innenspiegel 100 in die Abblendposition 112 bewegt werden kann. Ein solcher Formgedächtnis-Aktuator kann eine Formgedächtnislegierung (englisch: Shape Memory Alloy) umfassen und kann eine Metalllegierung umfassen, die in zwei unterschiedlichen Kristallstrukturen existieren kann. Damit kann sich der erste Formgedächtnis-Aktuator an eine frühere Formgebung trotz nachfolgender starker Verformung erinnern und kann wieder seine ursprüngliche Position, d.h. die in Figur 1 dargestellte Normalposition 110 einnehmen.

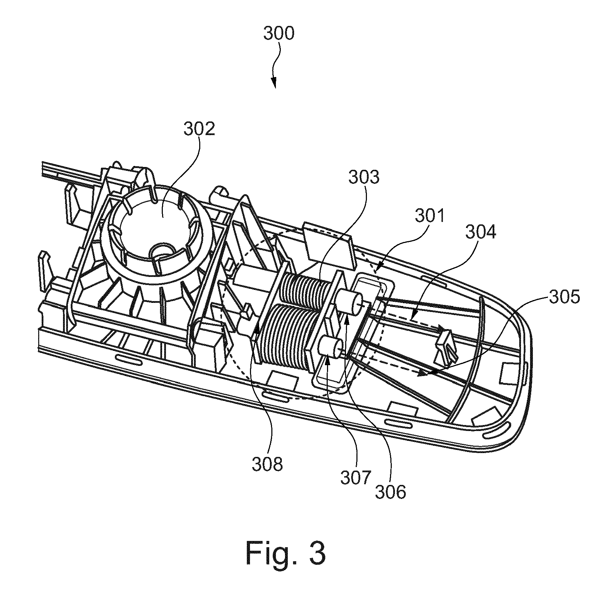

In einer Ausführungsform kann der erste Formgedächtnis-Aktuator einen Formgedächtnis-Draht umfassen, der ansprechend auf einen Stromfluss durch den Formgedächtnis-Draht seine Länge verändert. Der Stromfluss durch den Draht kann eine Temperaturerhöhung im Draht bewirken, so dass dieser sich ausdehnen kann. In einer Ausführungsform kann die Bedieneinrichtung 103 den Formgedächtnis-Draht ansprechend auf die Bewegung des Fahrers mit Strom versorgen, beispielsweise durch Anschließen an eine Stromversorgung des Fahrzeugs. In einer Ausführungsform kann der Formgedächtnis-Draht auf einer ersten Gewinderolle aufgerollt sein und ansprechend auf den Stromfluss eine Drehbewegung der ersten Gewinderolle bewirken, beispielsweise wie unten zu den Figuren 3 bis 7 beschrieben. In einer Ausführungsform kann die erste Gewinderolle eine Antriebsachse des Innenspiegels 100 bilden und kann den Innenspiegel um einen ersten Drehwinkel drehen, beispielsweise wie unten zu den Figuren 3 bis 7 beschrieben. In einer Ausführungsform kann der Formgedächtnis-Draht auf einer zweiten Gewinderolle aufgerollt seine, die den Innenspiegel 100 um einen zweiten Drehwinkel drehen kann, beispielsweise wie unten zu den Figuren 3 bis 7 beschrieben.

In einer Ausführungsform kann ein Durchmesser der zweiten Gewinderolle sich von einem Durchmesser der ersten Gewinderolle unterscheiden, beispielsweise wie unten zu den Figuren 3 bis 7 beschrieben. In einer Ausführungsform kann die Schwenkeinrichtung 102 einen weiteren Aktuator umfassen, der den Innenspiegel 100 in die Normalposition 110 zurückbewegen kann, beispielsweise wie unten zu den Figuren 3 bis 7 beschrieben. In einer Ausführungsform kann der weitere Aktuator einen zweiten Formgedächtnis-Aktuator umfassen, der ähnlich aufgebaut sein kann wie der oben beschriebene Formgedächtnis-Aktuator.

In einer Ausführungsform können beide Formgedächtnis-Aktuatoren unabhängig voneinander gesteuert werden. In einer Ausführungsform kann der zweite Formgedächtnis-Aktuator nach einer bestimmten Zeit den Innenspiegel 100 wieder in die Normalposition 110 zurückbewegen. In einer Ausführungsform kann der zweite Formgedächtnis-Aktuator abhängig von einer Blendsituation, beispielsweise detektierbar durch Blend-Sensorik, den Innenspiegel 100 wieder in die Normalposition 110 zurückbewegen. In einer Ausführungsform kann der zweite Formgedächtnis-Aktuator abhängig von einer Bewegung des Fahrers den Innenspiegel 100 wieder in die Normalposition 110 zurückbewegen. In einer Ausführungsform kann der zweite Formgedächtnis-Aktuator abhängig von einer Abkühlung des Formgedächtnisdrahtes des ersten Formgedächtnis-Aktuators den Innenspiegel 100 wieder in die Normalposition 110 zurückbewegen.

In einer Ausführungsform kann der weitere Aktuator ein Federelement aufweisen. In einer Ausführungsform kann das Federelement abhängig von einer Abkühlung des Formgedächtnisdrahtes des ersten Formgedächtnis-Aktuators den Innenspiegel 100 wieder in die Normalposition 110 zurückbewegen. In einer Ausführungsform kann die Kraft des Federelements gegen die Kraft der Ausdehnung des Formgedächtnisdrahtes des ersten Formgedächtnis-Aktuators gerichtet sein, um bei Abkühlung des Drahtes eine langsame Rückholung in die Normalposition 110 zu bewirken.

In einer Ausführungsform kann die Bedieneinrichtung 103 einen Sensor umfassen, mit dem eine Bewegung des Fahrers, insbesondere eine Armbewegung des Fahrers in Richtung des Innenspiegels, detektiert werden kann. In einer Ausführungsform kann die Bedieneinrichtung 103 ansprechend auf einen Schwellwert der detektierten Bewegung des Fahrers die Schwenkeinrichtung 102 aktivieren. Beispielsweise kann bei Überschreiten eines vorgegebenen Schwellwerts die Schwenkeinrichtung 102 aktiviert werden, so dass sich der Innenspiegel in die Abblendposition 112 bewegen kann.

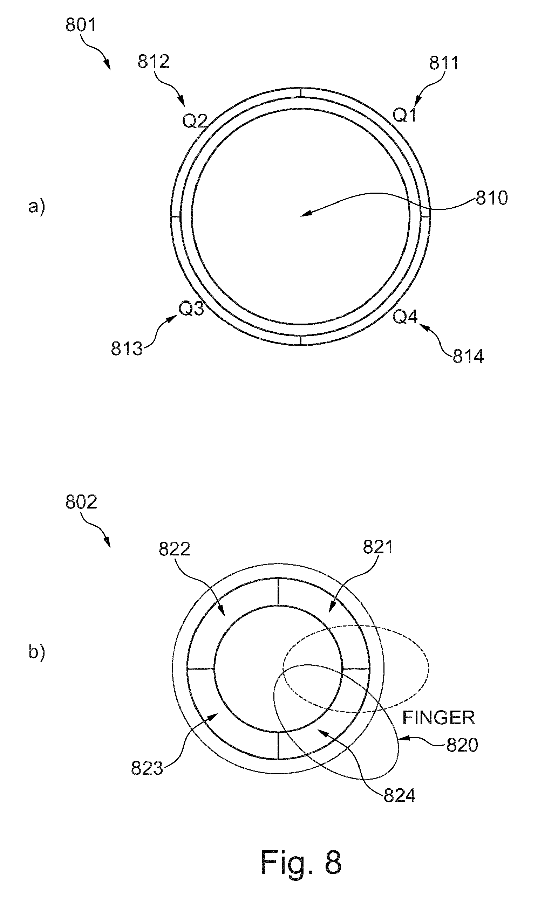

In einer Ausführungsform kann der Sensor eine Änderung eines elektrischen Feldes basierend auf der Bewegung des Fahrers detektieren, beispielsweise wie unten zu Figur 8 beschrieben. In einer Ausführungsform kann der Sensor einen kapazitiven Sensor mit einer aktiven Fläche umfassen. In einer Ausführungsform kann die aktive Fläche des Sensors bei Annäherung eines Objekts, beispielsweise einer Hand, eines Fingers oder eines Arms des Fahrers, an die aktive Fläche des Sensors eine elektrische Feldänderung detektieren, beispielsweise wie unten zu Figur 8 beschrieben. In einer Ausführungsform kann der kapazitive Sensor eine Richtung der Annäherung des Objekts an die aktive Fläche des Sensors erkennen. In einer Ausführungsform kann der Sensor eine oder mehrere Leuchtdioden (LEDs) sowie eine Fotodiode umfassen. In einer Ausführungsform kann die LED oder können die LEDs ein Umfeld des Innenspiegels 100 beleuchten, und die Fotodiode kann eine Änderung der Beleuchtung im Umfeld des Innenspiegels 100 verursacht durch die Bewegung des Fahrers detektieren, beispielsweise wie unten zu Figur 8 beschrieben.

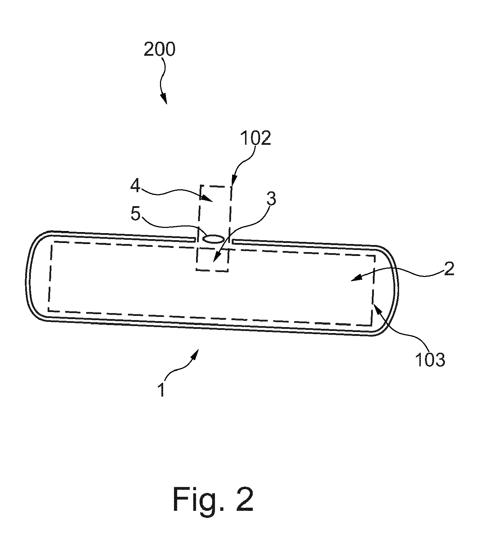

Figur 2 zeigt eine schematische Darstellung eines gestensteuerbaren Innenspiegels 200 für ein Fahrzeug gemäß einer weiteren Ausführungsform der Erfindung. Der Innenspiegel 200 kann entsprechend dem in Figur 1 beschriebenen Innenspiegel 100 eine Schwenkeinrichtung 102 und eine Bedieneinrichtung 103 aufweisen.

In einer Ausführungsform kann der Innenspiegel 200 einen FGL-Draht-Aktuator aufweisen und mit einem Sensor versehen sein, um eine Abblendvorrichtung über Gestensteuerung zu realisieren. In einer Ausführungsform kann der Innenspiegel 200 durch eine Bewegung im Winkel so abklappen, dass der Fahrer nicht mehr geblendet wird. In einer Ausführungsform kann die Bewegung durch einen Antrieb automatisch ausgeführt werden. In einer Ausführungsform kann der Antrieb geräuschlos funktionieren. In einer Ausführungsform kann der Antrieb einen Antrieb mit FGL-Draht umfassen. In einer Ausführungsform kann der Fahrer durch eine Handbewegung oder Geste oder auch durch eine Annäherung die Abklapp-, Aufklapp- oder Umklappbewegung des Innenspiegels 200, d.h. von der in Figur 2 dargestellten Normalposition in eine nicht dargestellte Abblendposition, hervorrufen und diese auch wieder mit einer Gestik oder Annäherung rückgängig machen. In einer Ausführungsform kann die Abklapp-, Aufklapp- oder Umklappbewegung des Innenspiegels 200 durch Gestensteuerung, Näherungsschalter etc. hervorgerufen werden.

Im Folgenden ist eine mögliche Interaktion des Fahrers mit dem Innenspiegel 200 beschrieben, um eine Bewegung des Innenspiegels 200 zu bewirken. Wenn eine Bewegung 1 in bestimmter Weise ausgeführt wird, kann sich der Winkel zwischen einem Spiegelhalter 204 und einer Glasfläche 202 des Innenspiegels 200 in dem Masse verändern, dass die Glasfläche 202 ein wenig mehr nach oben zum Dach des Fahrzeugs schaut, damit der Fahrer nicht mehr geblendet wird. Ein Aktuator, der hinter der Spiegelfläche bzw. Glasfläche 202 des Innenspiegels 200 liegen kann, kann für die automatische Bewegung sorgen. In einer Ausführungsform kann dies ein FGL-Aktuator sein, bei dem der Draht hinter der Spiegelfläche 202 liegen kann und bei einer Geste des Fahrers mit Strom durchflossen werden kann. Dadurch kann sich der Draht erwärmen und sich verkürzen und seine Bewegung kann in eine Drehbewegung am Drehpunkt 20 umgesetzt werden. Eine weitere Bewegung 201 im Gestenkanal kann für eine Rückdrehung des Innenspiegels 200 sorgen.

Figur 3 zeigt eine dreidimensionale Darstellung eines gestensteuerbaren Innenspiegels 300 für ein Fahrzeug gemäß einer noch weiteren Ausführungsform. Die Darstellung des Innenspiegels 300 kann einen Innenspiegel 100 wie oben zu Figur 1 beschrieben oder einen Innenspiegel 200 wie oben zu Figur 2 beschrieben veranschaulichen. Das Gehäuse des Innenspiegels 300 ist geöffnet dargestellt, so dass verschiedene mechanische Komponenten, die innerhalb des nicht dargestellten Gehäuses untergebracht sind, sichtbar sind. Die Glasfläche oder Spiegelfläche ist dem Betrachter abgewandt und daher nicht sichtbar.

Der Innenspiegel 300 umfasst einen Antrieb 301, mit dem sich ein Kugelgelenk 302 (in Figur 3 dargestellt durch ein Kalottenteil bzw. eine Kugelkalotte oder Kugelplatte) drehen lässt, um den Innenspiegel 300 entsprechend zu verdrehen. In einer Ausführungsform umfasst der Antrieb einen FGL-Draht 303. In einer Ausführungsform ist der Antrieb 301 als Jojo-Antrieb ausgeführt. Ein Jo-Antrieb dreht nur in eine Richtung, während die andere Richtung mit einer Feder zurückgezogen wird. Beim Jojo-Antrieb gibt es eine zweite Wicklung, die genau in die Gegenrichtung dreht, so dass der Jojo-Antrieb in beide Richtungen drehen kann. In der Ausführungsform der Figur 3 umfasst der Antrieb 301 eine erste Achse 304 und eine zweite Achse 305. Die erste Achse 304 kann mit zwei Windungen versehen sein, die in verschiedene Richtungen drehen, um einen Jojo-Antrieb zu realisieren. Auch die zweite Achse 305 kann mit zwei Windungen versehen sein, die in verschiedene Richtungen drehen, um einen Jojo-Antrieb zu realisieren.

In einer Ausführungsform kann der Antrieb 301 eine Drehung von mindestens 90° durchführen und einen Handhebel der Abblendvorrichtung ersetzen. In der Ausführungsform der Figur 3 umfasst der Antrieb 301 2 Achsen 304, 305.

In einer anderen Ausführungsform des Antriebs 301, die nicht in Figur 3 dargestellt ist, kann der Antrieb 301 mehr als zwei Achsen umfassen, beispielsweise 3, 4, 5, 6, 7 oder mehr. In einer Ausführungsform des Antriebs 301, die nicht in Figur 3 dargestellt ist, umfasst der Antrieb nur eine Achse 304. Für eine Drehung um 90° reichen in der Regel 2 Achsen aus.

In der Ausführungsform der Figur 3 umfasst der Antrieb 301 zwei stabile Punkte am Ende der Achse, die in das Kalottenteil des Kugelgelenks 302 eingreifen. Damit kann ein zufälliges Verstellen nach der Drehung verhindert werden.

In der Ausführungsform der Figur 3 sind FGL-Drähte 303 auf den Rollen 306, 307, welche in Richtung der zwei Achsen 304, 305 angeordnet sind, aufgewickelt und können durch Stromimpulse erwärmt werden und sich so verkürzen, um eine Drehung um 90° zu vollziehen.

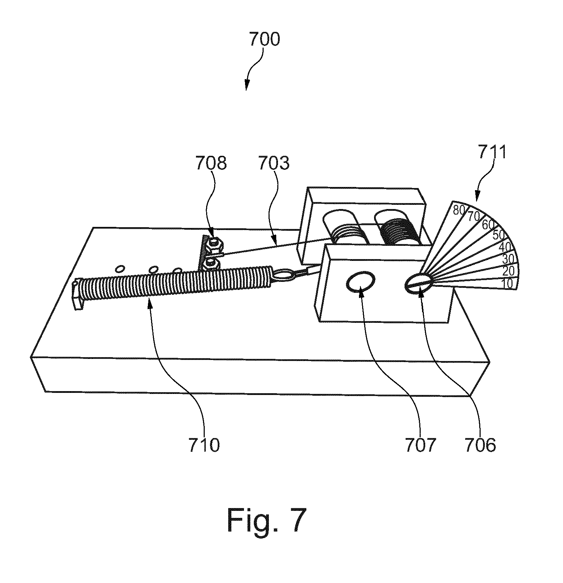

In einer Ausführungsform, die nicht in Figur 3 dargestellt ist, kann der Antrieb 301 als Jo-Antrieb ausgeführt sein. Hier wird nur eine Drehrichtung (Jo) genutzt und die Rückbewegung kann mit einem Federelement ausgeführt werden, beispielsweise nach einer bestimmten Zeit oder mittels eines Sensors, der eine Blendung überwacht. Ein solcher Jo-Antrieb ist beispielhaft in Figur 7 dargestellt.

In einer Ausführungsform, die nicht in Figur 3 dargestellt ist, kann der Antrieb 301 als Jo-Antrieb mit einem Push-Push Button (umschaltbarer Drückknopf) realisiert sein, der konstruktiv, beispielsweise über Betätigung des Drückknopfes beide Funktionen abbilden kann, d.h. in beide Richtungen drehen kann.

In der Ausführungsform der Figur 3 umfasst der Antrieb 301 eine Fixierungsplatte 308, die zur Fixierung der Drähte 303 auf zwei Rollen 306, 307 dient. Die Drähte werden von der Fixierungsplatte 308 über die zweite Rolle 307 und dann über die erste Rolle 306 geführt und dort auch fixiert. In einer Ausführungsform kann ein Steuergerät seine Stromanschlüsse an der Fixierungsplatte 308 aufweisen. Die Steuerung kann dann eine exakte Messung der Innenwiderstände durchführen, um die Drähte 303 exakt zu erwärmen und die Kraft zu dosieren.

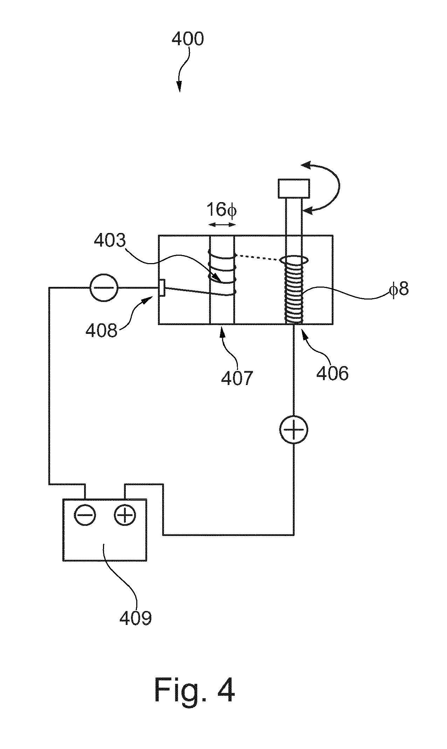

Figur 4 zeigt eine schematische Darstellung in Draufsicht eines zweiachsigen Mini-Jo 400 für einen gestensteuerbaren Innenspiegel gemäß einer Ausführungsform. Der Mini-Jo 400 kann beispielsweise in einem Antrieb 301 für einen Innenspiegel 300, wie in Figur 3 beschrieben, eingesetzt werden. Wie bereits erläutert, bedeutet der Begriff Jo, dass der Antrieb nur in eine Richtung dreht und die andere Richtung beispielsweise mit einer Feder zurückgezogen werden kann, beispielsweise gemäß der Darstellung der Figur 7. Beim Jojo-Antrieb gibt es eine zweite Windung, die genau in die Gegenrichtung drehbar ist.

In der Ausführungsform der Figur 4 umfasst der Mini-Jo 400 eine erste Gewinderolle 406, beispielsweise entsprechend der in Figur 3 dargestellten ersten Gewinderolle 306, und eine zweite Gewinderolle 407, beispielsweise entsprechend der in Figur 3 dargestellten zweiten Gewinderolle 307. In der Ausführungsform der Figur 4 ist die zweite Gewinderolle 407 dicker als die erste Gewinderolle 406. In der Ausführungsform der Figur 4 hat die erste Gewinderolle 406 einen Durchmesser von 8 mm und die zweite Gewinderolle 407 einen Durchmesser von 16 mm. In einer Ausführungsform, die nicht in Figur 4 dargestellt ist, hat die erste Gewinderolle 406 einen Durchmesser im Bereich von 1 bis 16 mm und die zweite Gewinderolle 407 einen Durchmesser im Bereich von 8 bis 32 mm. Andere Dicken bzw. Durchmesser sind ebenfalls realisierbar. Auf der dicken zweiten Gewinderolle 407 ist der Hauptteil des Windungen bildenden Drahts 403 aufgerollt. Auf der schmalen ersten Gewinderolle 406 sind nur wenige Windungen aufgerollt. In einer Ausführungsform kann die schmale erste Gewinderolle 406 als Antriebsachse vorgesehen sein. In einer Ausführungsform kann die schmale erste Gewinderolle 406 hohl sein, um den Draht 403 innen durch mit Strom zu versorgen. In der Ausführungsform der Figur 4 ist der Draht 403 erst fix mit dem Gehäuse verbunden (Fixierungspunkt 408 beispielsweise an einer Fixierungsplatte 308 wie oben zu Figur 3 beschrieben), wo er mit Strom versorgt wird, geht dann auf die dicke zweite Rolle 407, wo er mehrere Windungen hat und verläuft schließlich zur dünneren ersten Antriebsrolle 406. Dort taucht er durch ein Loch ins Innere der Rolle 406 und wird nach außen zur Stromversorgung 409 geführt. In einer Ausführungsform umfasst die Stromversorgung 409 eine Autobatterie.

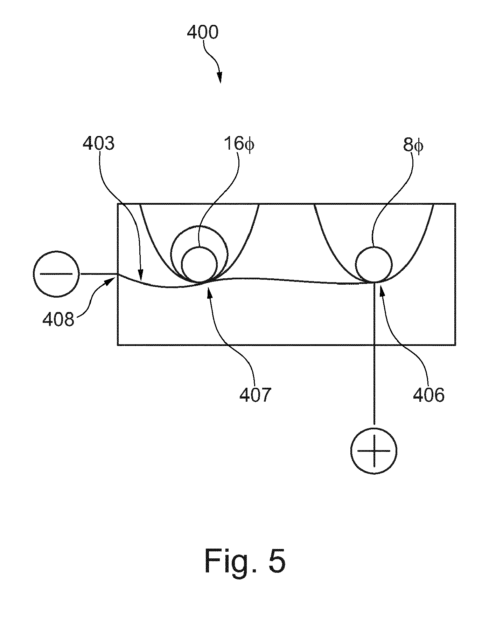

Figur 5 zeigt eine schematische Darstellung in Seitenansicht des zweiachsigen Mini-Jo 400 aus Figur 4. In der Ausführungsform der Figur 5 ist der Draht 403 am Fixierungspunkt 408 fix mit dem Gehäuse verbunden, wo er mit Strom versorgt wird, verläuft dann auf die dicke zweite Rolle 407, wo er mehrere Windungen hat und verläuft dann weiter zur dünneren ersten Antriebsrolle 406. Dort taucht er durch ein Loch ins Innere der Rolle 406 und wird nach außen zur Stromversorgung 409 geführt. Die Zuleitungen zur Stromversorgung sind mit den Zeichen "+" und "-" gekennzeichnet.

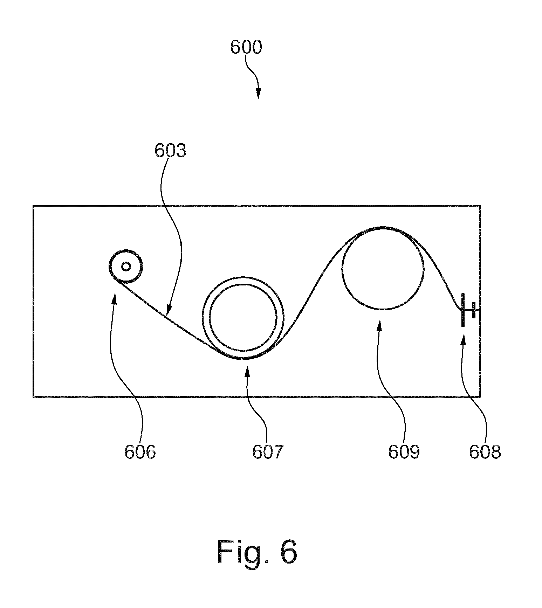

Figur 6 zeigt eine schematische Darstellung in Draufsicht eines dreiachsigen Mini-Jo 600 für einen gestensteuerbaren Innenspiegel gemäß einer Ausführungsform.

Der Mini-Jo 600 kann beispielsweise in einem Antrieb 301 für einen Innenspiegel 300, wie in Figur 3 beschrieben, eingesetzt werden. Der dreiachsige Mini-Jo 600 kann dem zweiachsigen Mini-Jo 400 aus den Figuren 4 und 5 entsprechen mit dem Unterschied, dass ein Draht 603 noch über eine weitere dritte Rolle geführt wird.

In der Ausführungsform der Figur 6 ist der Draht 603 am Fixierungspunkt 608 fix mit dem Gehäuse verbunden, wo er mit Strom versorgt wird, verläuft dann über die dritte Rolle 609, wo er mehrere Windungen aufweist, weiter zur zweiten Rolle 607 und zur ersten Rolle 606, die als Antriebsrolle dienen kann. Dort taucht er durch ein Loch ins Innere der Rolle 606 und wird nach außen zur Stromversorgung geführt.

Mit dem dreiachsigen Mini-Jo 600 können mehr Drehwinkel erzeugt werden als mit einem zweiachsigen Mini-Jo. In einer Ausführungsform, die nicht in Figur 6 dargestellt ist, umfasst der Mini-Jo weitere Achsen, um noch größere Drehwinkel realisieren zu können.

Die in den Figuren 4 bis 6 dargestellten Ausführungsformen können auch als Mini-Jojos realisiert werden, d.h. mit zwei Drähten, die jeweils entgegengesetzt zueinander drehen. Ebenfalls kann ein Federelement eingesetzt werden, das den Spiegel langsam wieder in die Ausgangsposition zieht. In der Variante mit Federelement kann der Antrieb beispielsweise so realisiert sein, dass durch die Gestenbewegung nur die Abblendposition angefahren wird, während die alte Position (Normalposition) nach einer bestimmten Abkühlzeit des Drahtes wieder automatisch eingestellt wird. Bei der Variante mit Jojo kann jede Gestenhandbewegung ihre Position finden.

Figur 7 zeigt eine dreidimensionale Darstellung eines Antriebs 700 für einen gestensteuerbaren Innenspiegel, der als Jo mit Federelement realisiert ist gemäß einer Ausführungsform. Der Antrieb 700 kann beispielsweise als Antrieb 301 für einen Innenspiegel 100, 200, 300, wie in den Figuren 1, 2 und 3 beschrieben, dienen.

In der Ausführungsform der Figur 7 ist ein Draht 703 an einem Fixierungspunkt 708 fix mit einem Gehäuse verbunden, wo er mit Strom versorgt wird, verläuft dann über eine zweite Rolle 707, wo er mehrere Windungen aufweist, weiter zu einer ersten Rolle 706, die als Antriebsrolle dienen kann. Dort taucht er durch ein Loch ins Innere der Rolle 706 und wird nach außen zur Stromversorgung geführt. Der Draht 703 mit den zwei Rollen 706, 707 bilden das Jo-Element, das in eine Richtung dreht, während ein Federelement 710 eine Rückdrehung in die Ausgangsposition bewirkt. Es lassen sich mit dem Antrieb 700 verschiedene Drehwinkel 711 realisieren, beispielsweise im Bereich von 0° bis 90° wie auf der Skala angezeigt.

Figur 8a zeigt eine schematische Darstellung eines Sensors 801 mit Leuchtdioden 811, 812, 813, 814 und Fotodiode 810 für einen gestensteuerbaren Innenspiegel gemäß einer Ausführungsform. Der Sensor 800 kann beispielsweise in einem Innenspiegel 100, 200, 300, wie in den Figuren 1, 2 und 3 beschrieben, verwendet werden, beispielsweise als Teil der Bedieneinrichtung 103. In einer Ausführungsform kann für die Gestensteuerung im Innenspiegel ein LED-Array, beispielsweise mit Infrarot Leuchtdioden, wie in Figur 8a dargestellt, verwendet werden.

Bei der in Figur 8a dargestellten LED-Technik können ein oder mehrere LEDs 811, 812, 813, 814 genutzt werden, um einen bestimmten Raum zu überwachen. Im Mittelpunkt kann sich eine Empfangsdiode 810, beispielsweise in Form einer Fotodiode, befinden, die eine Änderung der Lichtverhältnisse aufgrund der Bewegung des Fahrers, beispielsweise die Bewegung eines Fingers, einer Hand oder eines Arms, erkennen kann. In Figur 8a ist eine Überwachung mit 4 LEDs dargestellt. In weiteren Ausführungsformen können auch 1, 2, 3 oder mehr als 4 LEDs genutzt werden, um die Beleuchtung zu realisieren. In Figur 8a ist eine Überwachung mit einer Fotodiode 810 dargestellt. In weiteren Ausführungsformen können auch mehrere Fotodioden genutzt werden, um die Überwachung zu realisieren. Mit mehreren Fotodioden kann beispielsweise eine Richtungserkennung erfolgen.

Der Sensor 801 umfassend die Leuchtdioden 811, 812, 813, 814 und die Fotodiode 810 kann Bewegungsmuster erkennen. Der Sensor 801 kann intuitive Bewegungsmuster erkennen und den Aktuator damit in eine bestimmte Richtung starten, so dass sowohl eine Drehung des Innenspiegels von der Normalposition in die Abblendposition als auch zurück möglich ist. Die Bewegungssteuerung kann auch zum Bereitstellen anderer Medien verwendet werden.

Figur 8b zeigt eine schematische Darstellung eines Sensors 802 mit E-Feld-Sensor-Technologie für einen gestensteuerbaren Innenspiegel gemäß einer Ausführungsform. Durch die Leitfähigkeit des menschlichen Körpers wird ein schwaches elektrisches Feld, das die mit Sensoren 821, 822, 823, 824 ausgestattete Applikation umgibt, verändert. Dabei erkennen die Sensoren 821, 822, 823, 824 die Annäherung und die Position etwa eines Fingers 820 vor einem Gerät oder Bildschirm in einem Radius von bis etwa 20 cm und senden die X-, Y- und Z-Achsen-Positionsdaten an eine Elektronik. Das alles kann in Echtzeit erfolgen.

Durch eine Bewegung des rechten Arms in Richtung Innenspiegel kann der Spiegel die Geste erkennen und den Aktuator in Gang setzen, der so eine Winkeländerung im Spiegelglas bewirkt, dass eine Blendung des Fahrers nicht mehr möglich ist oder zumindest reduziert bzw. eingeschränkt ist. Mit einer ähnlichen Geste kann dies wieder rückgängig gemacht werden.

Der Sensor 802 kann ohne Bilderfassung eine Positionsbestimmung des Körpers durchführen. Der Sensor 802 kann intuitive Bewegungsmuster erkennen und den Aktuator damit in eine bestimmte Richtung starten, so dass sowohl eine Drehung des Innenspiegels von der Normalposition in die Abblendposition als auch zurück möglich ist. Die Bewegungssteuerung kann auch zum Bereitstellen anderer Medien verwendet werden.

Eine weitere Variante, die nicht in den Figuren 8a und 8b dargestellt ist, sind kapazitive Näherungssensoren. Dabei kann die aktive Fläche des kapazitiven Sensors von zwei Elektroden gebildet werden, beispielsweise metallene Elektroden. Die Betätigung des kapazitiven Sensors kann durch Objektannäherung an die aktive Fläche des Sensors erfolgen. Das Objekt gelangt so in das elektrische Feld der Elektrodenfläche. Hierdurch wird die Koppelkapazität erhöht und ein Oszillator kann zu schwingen beginnen. Über eine Auswerteeinheit kann die Schwingungsamplitude erfasst und in ein Schaltsignal umgesetzt werden, das wiederum den Aktuator des Innenspiegels steuern kann. Kapazitive Aktuatoren können von leitenden und nichtleitenden Materialien betätigt werden. In einer Ausführungsform kann die Elektrode des kapazitiven Sensors auf der Platine ausgeführt werden. In einer Ausführungsform kann die Elektrode des kapazitiven Sensors im Gehäuse des Innenspiegels untergebracht sein. In einer Ausführungsform kann die Elektrode des kapazitiven Sensors im Gehäuse in zwei Teile geteilt sein, um eine genauere Detektion zu erhalten. Die Elektronik kann Unterschiede der Kapazitäten bis in den Femto-Bereich messen. In einer Ausführungsform kann der kapazitive Sensor Annäherungen detektieren. In einer Ausführungsform kann der kapazitive Sensor eine Richtungsangabe auswerten. Die Geste kann dabei hauptsächlich durch die Geschwindigkeit geprägt sein, so dass nur ein schnelles Annähern und Entfernen den Spiegel auslösen kann. Damit kann es nicht passieren, dass ein Einstellen des Spiegels oder ein Betätigen der Rauminnenbeleuchtung zur Auslösung führen.

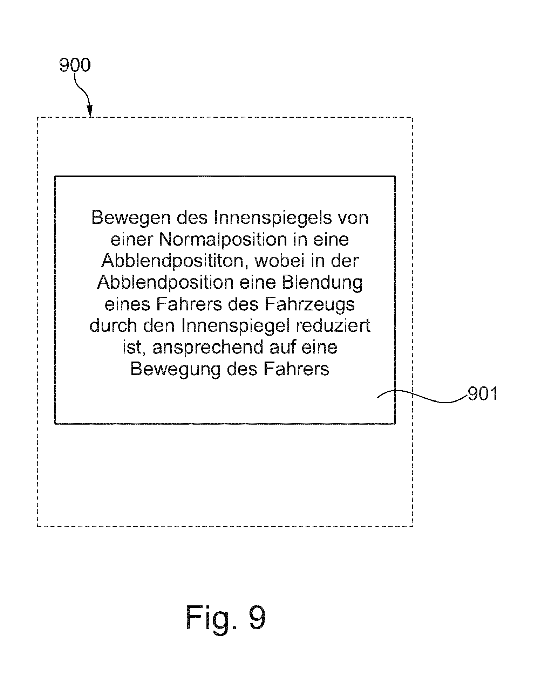

Figur 9 zeigt eine schematische Darstellung eines Verfahrens 900 zur gestengesteuerten Schwenkung eines Innenspiegels für ein Fahrzeug gemäß einer Ausführungsform. Das Verfahren 900 kann ein Bewegen 901 des Innenspiegels von einer Normalposition in eine Abblendposition umfassen, wobei in der Abblendposition eine Blendung eines Fahrers des Fahrzeugs durch den Innenspiegel reduziert ist, ansprechend auf eine Bewegung des Fahrers. In einer Ausführungsform des Verfahrens 900 kann das Verfahren ferner ein Detektieren der Bewegung des Fahrers umfassen, insbesondere einer Armbewegung des Fahrers in Richtung des Innenspiegels basierend auf einer Änderung eines elektrischen Feldes; und ein Auslösen der Bewegung des Innenspiegels in die Abblendposition durch Betätigung eines Formgedächtnis-Aktuators ansprechend auf die Bewegungsdetektion. Das Bewegen 901 des Innenspiegels kann entsprechend der obigen Beschreibung zu den Figuren 1 bis 8 realisiert sein.

Ein Aspekt der Erfindung umfasst auch ein Computerprogrammprodukt, das direkt in den internen Speicher eines digitalen Computers geladen werden kann und Softwarecodeabschnitte umfasst, mit denen der Verfahrensschritt 901 des in Figur 9 beschriebenen Verfahrens ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, den Innenspiegel entsprechend der Beschreibung zu den Figuren 1 bis 9 zu bewegen. Der Computer kann ein Steuerungsgerät sein, das den Innenspiegel des Fahrzeugs steuert. Der Computer kann als ein Chip, ein ASIC, ein Mikroprozessor oder ein Signalprozessor realisiert sein und im Fahrzeug, insbesondere im Innenspiegel angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt, müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100: Innenspiegel
- 102: Schwenkeinrichtung
- 103: Bedieneinrichtung
- 110: Normalposition
- 112: Abblendposition
- 200: Innenspiegel
- 201: Bewegung
- 202: Glasfläche
- 204: Spiegelhalter
- 205: Drehpunkt
- 300: Innenspiegel
- 301: Antrieb
- 302: Kugelgelenk
- 303: FGL-Draht
- 304: Achse
- 305: Achse
- 306: Rolle
- 307: Rolle
- 308: Fixierungsplatte
- 400: Mini-Jo
- 403: Draht
- 406: Gewinderolle
- 407: Gewinderolle
- 408: Fixierungspunkt
- 409: Stromversorgung
- 600: Mini-Jo
- 603: Draht
- 606: Rolle
- 607: Rolle
- 608: Fixierungspunkt
- 609: Rolle
- 700: Antrieb
- 703: Draht
- 706: Rolle
- 707: Rolle
- 708: Fixierungspunkt
- 710: Federelement
- 711: Drehwinkel
- 801: Sensor
- 802: Sensor
- 810: Fotodiode
- 811: Leuchtdiode
- 812: Leichtdiode
- 813: Leuchtdiode
- 814: Leuchtdiode
- 820: Finger
- 821: Sensor
- 822: Sensor
- 823: Sensor
- 824: Sensor
- 900: Verfahren
- 901: Bewegung

## Patentansprüche

1. Schwenkbarer Innenspiegel (100, 200, 300) für ein Fahrzeug, mit
einer Schwenkeinrichtung (102), die ausgelegt ist, den Innenspiegel (100, 200, 300) von einer Normalposition (110) in eine Abblendposition (112) zu bewegen, wobei in der Abblendposition (112) eine Blendung eines Fahrers des Fahrzeugs durch den Innenspiegel (100, 200, 300) reduziert ist; und
einer Bedieneinrichtung (103), die ausgelegt ist, die Schwenkeinrichtung (102) ansprechend auf eine Bewegung des Fahrers zu aktivieren.

2. Schwenkbarer Innenspiegel (100, 200, 300) nach Anspruch 1, **dadurch gekennzeichnet, dass** die Schwenkeinrichtung (102) einen Formgedächtnis-Aktuator (301) umfasst, der ausgelegt ist, den Innenspiegel (100, 200, 300) in die Abblendposition (112) zu bewegen.

3. Schwenkbarer Innenspiegel (100, 200, 300) nach Anspruch 2, **dadurch gekennzeichnet, dass** der Formgedächtnis-Aktuator (301) einen Formgedächtnis-Draht (303, 403, 603, 703) umfasst, der ansprechend auf einen Stromfluss durch den Formgedächtnis-Draht (303, 403, 603, 703) seine Länge verändert.

4. Schwenkbarer Innenspiegel (100, 200, 300) nach Anspruch 3, **dadurch gekennzeichnet, dass** die Bedieneinrichtung (103) ausgelegt ist, den Formgedächtnis-Draht (303, 403, 603, 703) ansprechend auf die Bewegung des Fahrers mit Strom zu versorgen, insbesondere an eine Stromversorgung (409) des Fahrzeugs anzuschließen.

5. Schwenkbarer Innenspiegel (100, 200, 300) nach Anspruch 3 oder 4, **dadurch gekennzeichnet, dass** der Formgedächtnis-Draht (303, 403, 603, 703) auf einer ersten Gewinderolle (306, 406, 606, 706) aufgerollt ist und ansprechend auf den Stromfluss eine Drehbewegung der ersten Gewinderolle (306, 406, 606, 706) bewirkt.

6. Schwenkbarer Innenspiegel (100, 200, 300) nach Anspruch 5, **dadurch gekennzeichnet, dass** die erste Gewinderolle (306, 406, 606, 706) eine Antriebsachse (304) des Innenspiegels (100, 200, 300) bildet und ausgelegt ist, den Innenspiegel (100, 200, 300) um einen ersten Drehwinkel zu drehen.

7. Schwenkbarer Innenspiegel (100, 200, 300) nach Anspruch 6, **dadurch gekennzeichnet, dass** der Formgedächtnis-Draht (303, 403, 603, 703) auf einer zweiten Gewinderolle (307, 407, 607, 707) aufgerollt ist, die ausgelegt ist, den Innenspiegel (100, 200, 300) um einen zweiten Drehwinkel zu drehen, wobei ein Durchmesser der zweiten Gewinderolle (307, 407, 607, 707) sich von einem Durchmesser der ersten Gewinderolle (306, 406, 606, 706) unterscheidet.

8. Schwenkbarer Innenspiegel (100, 200, 300) nach einem der Ansprüche 2 bis 7, **dadurch gekennzeichnet, dass** die Schwenkeinrichtung (102) einen weiteren Aktuator umfasst, der ausgelegt ist, den Innenspiegel (100, 200, 300) in die Normalposition (110) zurückzubewegen, wobei der weitere Aktuator einen zweiten Formgedächtnis-Aktuator oder ein Federelement (710) umfasst.

9. Schwenkbarer Innenspiegel (100, 200, 300) nach einem der vorangehenden Ansprüche, **dadurch gekennzeichnet, dass** die Bedieneinrichtung (103) einen Sensor (801, 802) umfasst, der ausgelegt ist, eine Bewegung des Fahrers, insbesondere eine Armbewegung des Fahrers in Richtung des Innenspiegels (100, 200, 300), zu detektieren und ansprechend auf einen Schwellwert der Detektion die Schwenkeinrichtung (102) zu aktivieren.

10. Schwenkbarer Innenspiegel (100, 200, 300) nach Anspruch 9, **dadurch gekennzeichnet, dass** der Sensor (802) ausgelegt ist, eine Änderung eines elektrischen Feldes basierend auf der Bewegung des Fahrers zu detektieren.

11. Schwenkbarer Innenspiegel (100, 200, 300) nach Anspruch 9 oder 10, **dadurch gekennzeichnet, dass** der Sensor folgendes umfasst:
einen kapazitiven Sensor mit einer aktiven Fläche, der ausgelegt ist, bei Annäherung eines Objekts, insbesondere einer Hand des Fahrers, an die aktive Fläche des Sensors, eine elektrische Feldänderung zu detektieren.

12. Schwenkbarer Innenspiegel (100, 200, 300) nach Anspruch 11, **dadurch gekennzeichnet, dass** der kapazitive Sensor ausgelegt ist, eine Richtung der Annäherung des Objekts an die aktive Fläche des Sensors zu erkennen.

13. Schwenkbarer Innenspiegel (100, 200, 300) nach Anspruch 9, **dadurch gekennzeichnet, dass** der Sensor (801) folgendes umfasst:
zumindest eine Leuchtdiode (811, 812, 813, 814), die ausgelegt ist, ein Umfeld des Innenspiegels (100, 200, 300) zu beleuchten; und
eine Fotodiode (810), die ausgelegt ist, eine Änderung der Beleuchtung im Umfeld des Innenspiegels (100, 200, 300) durch die Bewegung des Fahrers zu detektieren.

14. Schwenkbarer Innenspiegel (100, 200, 300) nach Anspruch 9, **dadurch gekennzeichnet, dass** der Sensor für eine Lichtlaufzeitmessung ausgelegt ist, insbesondere einen TOF-Sensor umfasst.

15. Verfahren (900) zur gestengesteuerten Schwenkung eines schwenkbaren Innenspiegels für ein Fahrzeug, nach einem der folgenden Ansprüche, **gekennzeichnet durch** folgende Schritte:
• Detektieren der Bewegung eines Fahrers des Fahrzeugs, insbesondere einer Armbewegung des Fahrers in Richtung des Innenspiegels basierend auf einer Änderung eines elektrischen Feldes; und
• Auslösen einer Bewegung des Innenspiegels von einer Normalposition in eine Abblendposition **durch** Betätigung eines Formgedächtnis-Aktuators, ansprechend auf die Bewegungsdetektion,
wobei in der Abblendposition eine Blendung des Fahrers des Fahrzeugs **durch** den Innenspiegel reduziert ist.

16. Fahrzeug mit einem schwenkbaren Innenspiegel (100, 200, 300) nach einem der vorangehenden Ansprüche.
